# FASCICULE DE BREVET EUROPEEN

(11) **EP 3 326 003 B1**
(45) Date de publication et mention de la délivrance du brevet: **03.07.2019**
(21) Numéro de dépôt: 16750883.7
(22) Date de dépôt: 20.07.2016
(51) Int. Cl.: G01S 17/02, G01S 7/497, G01S 7/484, F41H 13/00

(54) **PROCÉDÉ ET DISPOSITIF POUR SÉCURISER UN ESPACE TRAVERSÉ PAR UN FAISCEAU LASER DE FORTE PUISSANCE**
VERFAHREN UND VORRICHTUNG ZUR SICHERUNG EINES VON EINEM HOCHLEISTUNGSLASERSTRAHL DURCHKREUZTEN RAUMS
METHOD AND DEVICE FOR SECURING A SPACE CROSSED BY A HIGH-POWER LASER BEAM

(30) Priorité: 22.07.2015 FR 1501554
(43) Date de publication de la demande: 30.05.2018
(73) Titulaire: ArianeGroup SAS, 75015 Paris (FR)
(72) Inventeur: HAAG, Hervé, 31650 Auzielle (FR); DE LA VILLEGEORGES, Thibault, 78510 Triel sur Seine (FR); ESMILLER, Bruno, 78670 Villennes sur Seine (FR)
(74) Mandataire: Gevers & Orès
(86) Numéro de dépôt international: PCT/FR2016/000124
(87) Numéro de publication internationale: WO 2017/013315

(56) Documents cités:
- EP-A1- 2 485 064
- WO-A1-97/21261
- WO-A1-2011/121333
- WO-A1-2012/010839
- WO-A1-2013/026180
- DE-A1-102005 019 233
- US-A1- 2011 043 785

## Description

La présente invention concerne un procédé et un dispositif pour sécuriser un espace traversé par un faisceau laser de forte puissance.

On sait que pour protéger un objet (personne, animal, aéronef,...) contre les blessures et détériorations susceptibles d'être occasionnées par un faisceau laser de forte puissance, il est usuel de surveiller l'espace (terrestre ou aérien) dans lequel est engendré ledit faisceau laser par un système radar ou par caméra optique. Ainsi, lorsqu'un tel objet est détecté par le système radar ou par la caméra, on peut prendre des dispositions, telles que l'arrêt du faisceau laser ou le déroutement dudit objet, pour éviter que ce dernier entre en contact avec ledit faisceau laser.

Outre le fait qu'une telle solution connue est généralement onéreuse, elle présente l'inconvénient majeur de mettre en oeuvre des moyens (système radar ou caméra optique) indépendants du faisceau laser de forte puissance, ce qui complique et allonge les procédures de protection, et nuit à la sécurité.

Le document WO 97/21261 décrit un système comprenant des moyens de générer un faisceau de sécurité faible et un faisceau de puissance. Le faisceau de sécurité faible qui entoure le faisceau de puissance détecte tout objet pénétrant dans l'enveloppe créée par le faisceau de sécurité faible.

Le document WO 2011/121333 décrit un dispositif d'éblouissement dans lequel l'intensité du faisceau éblouissant est modulée conformément à la plage d'une cible à éblouir.

L'objet de la présente invention est de remédier à ces inconvénients.

À cette fin, selon l'invention, le procédé pour sécuriser un espace traversé par un faisceau laser de forte puissance est remarquable en ce que :
- on engendre au moins un faisceau laser de sécurité à faible densité de puissance, présentant la forme d'une enveloppe qui est positionnée et alignée pour entourer ledit faisceau laser de forte puissance sur au moins une partie de la longueur de celui-ci ; et
- on interdit l'émission dudit faisceau laser de forte puissance dans le cas où un objet rencontre ledit faisceau laser de sécurité.

Ainsi, selon l'invention, le laser de sécurité et le laser de forte puissance forment un tout à champ étroit et sont dirigés dans la même direction, ce qui simplifie et rend plus robuste la détection dudit objet. De plus, cette détection est active, de sorte que la capacité de détection de la présente invention est supérieure à celle d'une caméra.

Afin de protéger les opérateurs servant le générateur du faisceau laser de forte puissance, ledit faisceau de sécurité entoure au moins la partie initiale (proche de ce générateur) dudit faisceau laser de forte puissance. La sécurité est alors avantageusement oculaire.

De préférence, ledit faisceau laser de sécurité présente la forme d'une enveloppe conique divergeant dans ledit espace à sécuriser.

Dans un mode de mise en oeuvre avantageux, on interdit l'émission dudit faisceau laser de forte puissance lorsqu'un objet rencontre une première fois ledit faisceau laser de sécurité et on rétablit l'émission dudit faisceau laser de forte puissance lorsque ledit objet rencontre une deuxième fois ledit faisceau laser de sécurité.

Lorsque, comme cela est usuel, ledit faisceau laser de forte puissance est mobile pour balayer ledit espace à sécuriser, ledit faisceau laser de sécurité est solidaire en déplacement dudit faisceau laser de forte puissance.

Pour éviter tout accident à la mise en marche dudit faisceau laser de forte puissance, avant l'émission de ce dernier, on fait décrire audit faisceau laser de sécurité au moins un motif de balayage permettant de s'assurer qu'aucun objet ne se trouve à l'intérieur de ladite enveloppe qu'il forme. Un tel motif de balayage peut représenter au moins une spirale.

Dans une forme de mise en oeuvre du procédé conforme à la présente invention permettant la sécurisation dudit espace à des distances ou altitudes différentes de celui-ci, on engendre une pluralité de faisceaux laser de sécurité coaxiaux, disposés l'un à la suite de l'autre, chacun desdits faisceaux laser de sécurité étant logé en partie dans le faisceau laser de sécurité précédent, ayant une densité de puissance supérieure à celle de ce faisceau laser de sécurité précédent et présentant une divergence inférieure à celle dudit faisceau laser de sécurité précédent.

La présente invention concerne également un dispositif pour sécuriser un espace traversé par un faisceau laser de forte puissance, ce dispositif comportant :
- au moins un générateur de faisceau laser de sécurité à faible densité de puissance ;
- un élément optique pour donner audit faisceau laser de sécurité la forme d'une enveloppe conique qui diverge dans ledit espace et qui est positionnée et alignée pour entourer ledit faisceau laser de forte puissance sur au moins une partie de la longueur de celui-ci ;
- un photodétecteur observant ladite enveloppe formée par le faisceau laser de sécurité ; et
- des moyens de commande de l'émission dudit faisceau laser de forte puissance contrôlés par ledit photodétecteur.

Ledit élément optique pour donner audit faisceau laser de sécurité la forme d'une enveloppe conique peut être un miroir tournant ou un axicon. Dans ce dernier cas, ledit photodétecteur peut observer ladite enveloppe du faisceau laser de sécurité à travers ledit axicon.

De préférence, le dispositif conforme à la présente invention comporte des moyens pour adapter le seuil de détection dudit photodétecteur à la luminosité ambiante.

En outre, la présente invention concerne un système laser de forte puissance comportant un dispositif de sécurisation tel que celui spécifié ci-dessus.

Les figures du dessin annexé feront bien comprendre comment l'invention peut être réalisée. Sur ces figures, des références identiques désignent des éléments semblables.
La figure 1 est le schéma synoptique d'un exemple de réalisation du système laser conforme à la présente invention.
Les schémas A à E de la figure 2 illustrent schématiquement un mode de fonctionnement du système laser de la figure 1.
La figure 3 montre des motifs spiralés de balayage.
La figure 4 est le schéma synoptique d'une variante de réalisation du système laser conforme à la présente invention.
La figure 5 illustre schématiquement un élément optique pour le système laser des figures 1 et 4.
La figure 6 illustre schématiquement une application du système laser conforme à la présente invention.

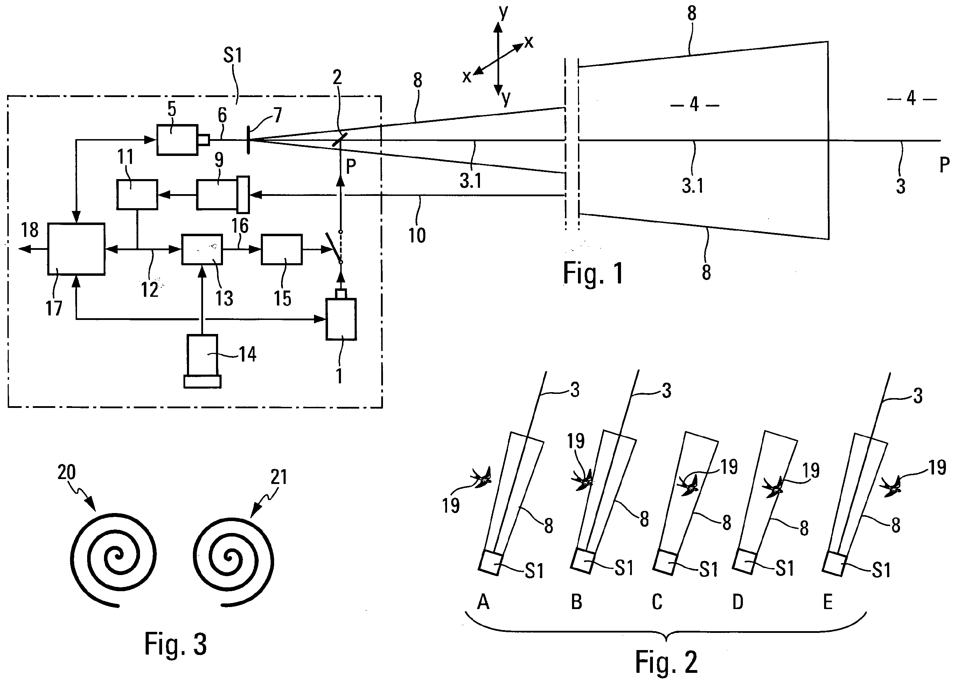

Le système laser de forte puissance S1, conforme à la présente invention et représenté schématiquement sur la figure 1, comporte un générateur laser de forte puissance 1, qui, par l'intermédiaire d'un miroir de renvoi 2, émet, dans un espace 4, un faisceau laser de forte puissance 3 d'axe P-P.

Le système laser S1 comporte de plus un dispositif de sécurisation de l'espace 4 contre les effets du faisceau laser de forte puissance 3, ce dispositif de sécurisation comportant :
- un générateur laser 5 engendrant un faisceau laser 6 de faible densité de puissance, également d'axe P-P comme le faisceau laser de forte puissance 3, ladite densité de puissance satisfaisant à la norme NF-EN 60825-1 ;
- un axicon 7 recevant ledit faisceau laser 6 de faible densité de puissance et le transformant en une enveloppe conique de sécurité 8 à faible puissance, également d'axe P-P. Ainsi, l'enveloppe conique de sécurité 8 est positionnée et alignée pour entourer le faisceau laser de forte puissance 3. La puissance de l'enveloppe conique de sécurité 8 diminue au fur et à mesure que celle-ci pénètre dans l'espace 4, de sorte qu'elle n'existe que sur la partie 3.1 du faisceau laser de forte puissance 3 disposée du côté du système laser S1. Il est avantageux que l'enveloppe conique de sécurité 8 soit à sécurité oculaire, afin de protéger les opérateurs servant le système laser S1 ;
- un système optique à grand champ 9 observant l'enveloppe conique de sécurité 8 de laquelle il reçoit le faisceau optique 10, pour détecter une éventuelle rencontre d'un objet avec ladite enveloppe conique de sécurité 8 ;
- un photodétecteur 11 recevant le signal optique reçu par le système optique 9 selon l'axe optique 10 et transformant ce signal optique détectant cette éventuelle rencontre en un signal électrique de détection 12 ;
- un contrôleur 13 recevant ledit signal électrique de détection 12, ainsi qu'une mesure de la luminosité ambiante autour du système laser S1 délivrée par une photodiode 14 ;
- un dispositif de commande 15 recevant le signal 16 émis par le contrôleur 13 et apte à commander l'émission du générateur laser de forte puissance 1. Sur la figure 1, on a représenté schématiquement le dispositif de commande 15 sous la forme d'un interrupteur commandé, mais il va de soi que ce dispositif de commande 15 peut être de tout type approprié, comme par exemple un obturateur mécanique occultant le faisceau laser 3, un système arrêtant le fonctionnement du générateur laser 1, un dispositif de mise hors alimentation électrique de ce dernier, etc... ;
- un système de déplacement motorisé 18 (non représenté, car pouvant être de tout type connu, tel que table XY, suspension à la Cardan, etc...) pour le système laser S1 ou au moins une partie de celui-ci, permettant à l'axe P-P, commun au faisceau laser de forte puissance 3 et à l'enveloppe conique de sécurité 8, de balayer l'espace 4 selon deux axes rectangulaires X-X, Y-Y ; et
- un calculateur 17, en liaison avec les générateurs laser 1 et 5, ainsi qu'avec le photodétecteur 11 et le système de déplacement motorisé 18, pour faire fonctionner le système laser S1, selon un algorithme décrit ci-après.

Les schémas A à E de la figure 2 illustrent le fonctionnement en sécurité du système laser S1.

Dans le schéma A, on a supposé que les générateurs laser 1 et 5 sont en fonctionnement et émettent respectivement le faisceau laser de forte puissance 3 et l'enveloppe conique de sécurité 8, alors qu'un objet 19, par exemple un oiseau, s'approche de cette dernière. Le schéma B illustre la situation pour laquelle l'objet 19 rencontre pour la première fois l'enveloppe conique de sécurité 8. Cette rencontre est détectée par le système optique 9, de sorte que le photodétecteur 11 engendre le signal électrique de détection 12 et que le contrôleur 13, tenant compte de la luminosité ambiante mesurée par la photodiode 14, commande l'arrêt du faisceau laser de forte puissance 3, par l'intermédiaire du signal 16 et du dispositif de commande 15. Cette nouvelle situation avec arrêt du faisceau laser de forte puissance 3 dure tant que l'objet 19 se trouve à l'intérieur de l'enveloppe conique de sécurité 8 (schéma C). Lorsque l'objet 19 rencontre pour la deuxième fois l'enveloppe conique de sécurité 8 pour en sortir (schéma D), ce fait est de nouveau détecté par le système optique 9 et le photodétecteur 11, de sorte que le contrôleur 13 peut commander le rétablissement du faisceau laser de forte puissance 3 (schéma E).

Préalablement à toute émission du faisceau laser de forte puissance 3, afin d'éviter un accident, on commence par émettre le faisceau laser 6 de faible densité de puissance pour former l'enveloppe conique de sécurité 8 et on fait décrire à l'axe P-P de celle-ci un balayage de l'espace 4 pour vérifier si un objet se trouve à l'intérieur de ladite enveloppe conique de sécurité 8. Si aucun objet n'est détecté, on peut procéder à l'émission du faisceau laser de forte puissance 3.

Pour effectuer ce balayage de l'espace 4 à l'intérieur de l'enveloppe conique de sécurité 8, on peut faire décrire audit axe P-P de cette dernière un motif spiralé, du type des spirales 20 et 21 montrées par la figure 3.

Les étapes de mise en oeuvre du système laser de forte puissance S1 commandées par l'algorithme du calculateur 17 sont donc de préférence les suivantes :
a) on met d'abord en fonctionnement le générateur laser 5 de faible densité de puissance, pour qu'il engendre l'enveloppe 8 de sécurité ;
b) ensuite, on effectue le balayage de l'espace 4 interne à l'enveloppe conique de sécurité 8 en faisant suivre à l'axe P-P un motif de balayage du type de ceux représentés sur la figure 3, afin de s'assurer qu'aucun objet ne se trouve à l'intérieur de ladite enveloppe conique de sécurité 8 ;
c) puis :
   - si un objet est détecté dans l'enveloppe conique de sécurité 8, on attend que le système S1 détecte l'objet une deuxième fois (sortie de l'enveloppe conique de sécurité 8 comme représentée sur le schéma D de la figure 2) et on réitère l'opération de balayage décrite ci-dessus ;
   - si aucun objet n'est détecté, le calculateur 17 permet l'émission du faisceau laser de forte puissance 3 ; et
d) si, pendant que le faisceau laser de forte puissance 3 est émis, un objet 19 est détecté une première fois (schéma B de la figure 2), le calculateur 17 coupe ledit faisceau laser de forte puissance 3 (schéma C de la figure 2), et attend la deuxième détection de cet objet (schéma D de la figure 2), puis le calculateur 17 réitère les étapes b et c, ci-dessus.

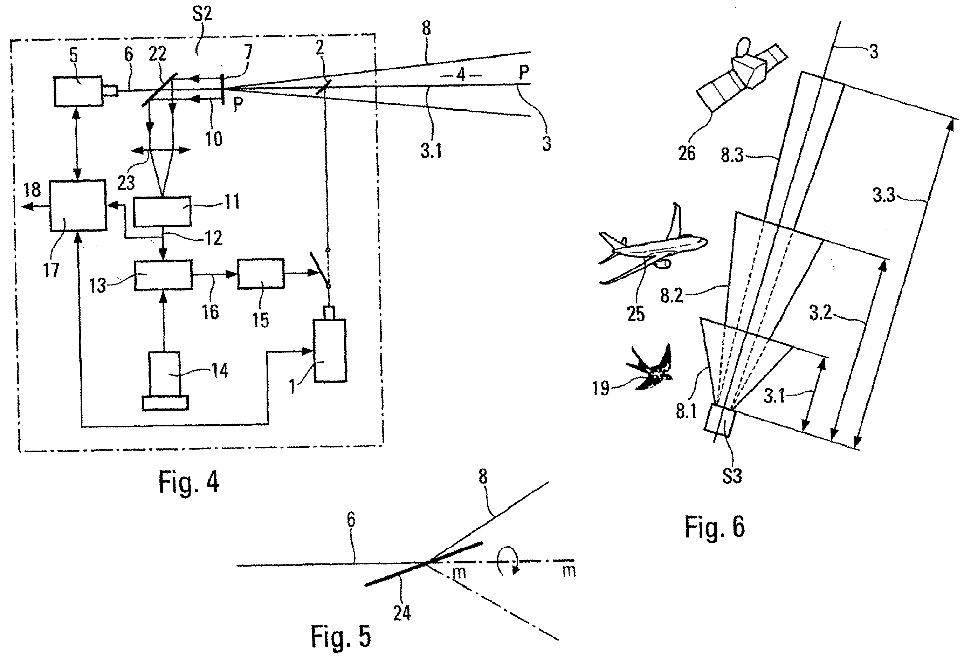

Dans la variante de réalisation S2 du système laser de forte puissance, conforme à la présente invention et représentée schématiquement sur la figure 4, on retrouve tous les éléments décrits ci-dessus à propos du système laser S1 de la figure 1, à l'exception du système optique à grand champ 9, qui a été supprimé. En effet, dans le système laser S2, qui fonctionne de façon identique à ce qui a été décrit pour le système laser S1, l'observation de l'enveloppe conique de sécurité 8 est assurée par l'axicon 7 lui-même, qui reçoit en retour le faisceau optique 10 à travers le miroir 2, prévu transparent pour ce dernier. Le faiseau optique 10 est séparé du faisceau laser 6 par un élément optique séparateur 22, qui l'adresse au photodétecteur 11, à travers un focalisateur 23.

On remarquera que :
- l'axicon 7, formant l'enveloppe conique de sécurité 8 à partir du faisceau laser à faible densité de puissance 6, peut être remplacé par un autre élément optique de même fonction, par exemple un miroir 24 tournant autour d'un axe m-m disposé en prolongement du faisceau laser 6, comme cela est illustré par la figure 5 ; et
- la photodiode 14, qui mesure la luminosité ambiante servant au seuillage du signal électrique 12 engendré par le photodétecteur 11, peut être éventuellement remplacée par un logiciel du calculateur 17 détectant les variations lentes dudit signal électrique 12.

On remarquera que, si l'on désire que la protection apportée par l'enveloppe conique de sécurité 8 soit de nature oculaire, au voisinage du système laser S1 ou S2, la portion 3.1 du faisceau laser 3 protégée par cette enveloppe ne peut être très longue : en effet, pour détecter des objets 19 à longue distance, il est nécessaire d'utiliser des faisceaux laser 6 de puissance élevée.

Pour remédier à cet inconvénient, la présente invention prévoit le système laser S3 représenté sur la figure 6, dans lequel une pluralité de générateurs laser 5 (non représentés) engendrent une pluralité d'enveloppes de sécurité coaxiales 8.1, 8.2, 8.3 ... semblables à l'enveloppe de sécurité 8 et disposées l'une à la suite de l'autre, chacune desdites enveloppes de sécurité étant logée en partie dans l'enveloppe de sécurité précédente, ayant une densité de puissance supérieure à celle de cette enveloppe de sécurité précédente et présentant une divergence inférieure à celle de ladite enveloppe de sécurité précédente.

Ainsi, on peut progressivement augmenter la longueur de la portion du faisceau 3 protégée, lesdites enveloppes de sécurité se protégeant entre elles. En se reportant à la figure 6, on peut voir que l'enveloppe 8.1 à sécurité oculaire, proche du système laser S1 ou S2, protège les opérateurs de ce dernier contre le faisceau laser 3 et contre l'enveloppe 8.2 sur une portion 3.1 dudit faisceau 3, que l'enveloppe de sécurité 8.2, dont la puissance est supérieure à celle de l'enveloppe 8.1, protège contre le faisceau laser 3 et contre l'enveloppe 8.3 sur une portion 3.2, supérieure à la portion 3.1, du faisceau 3, que l'enveloppe de sécurité 8.3, dont la puissance est supérieure à celle de l'enveloppe 8.2, protège contre le faisceau laser 3 sur une portion 3.3 de ce dernier supérieure à la portion 3.2, etc...

Grâce à l'agencement de la figure 6, il est donc possible de détecter des objets à des distances différentes du système laser S1, S2, avec sécurisation contre le faisceau laser de forte puissance 3. Par exemple, l'enveloppe de sécurité 8.1 est adaptée à la détection d'objets 19, évoluant à une altitude au plus égale à 1 km, l'enveloppe de sécurité 8.2 est adaptée à la détection d'objets 25, tels que des aéronefs, évoluant à une altitude comprise entre 1 km et 30 km, et l'enveloppe de sécurité 8.3 est adaptée à la détection d'objets 26, tels que des satellites, évoluant à une altitude supérieure à 300 km.

## Revendications

1. Procédé pour sécuriser un espace (4) traversé par un faisceau laser (3) de forte puissance :
**caractérisé en ce que** :
• on engendre au moins un faisceau laser de sécurité à faible densité de puissance (8), présentant la forme d'une enveloppe qui est positionnée et alignée pour entourer ledit faisceau laser de forte puissance (3) sur au moins une partie (3.1) de la longueur de celui-ci ;
• on interdit l'émission dudit faisceau laser de forte puissance (3) dans le cas où un objet (19) rencontre ledit faisceau laser de sécurité ; et
• on interdit l'émission dudit faisceau laser de forte puissance (3) lorsqu'un objet (19) rencontre une première fois ledit faisceau laser de sécurité (8) et on rétablit l'émission dudit faisceau laser de forte puissance (3) lorsque le même objet rencontre une deuxième fois ledit faisceau laser de sécurité (8)

2. Procédé selon la revendication 1,
**caractérisé en ce que** ledit faisceau laser de sécurité (8) entoure au moins la partie initiale (3.1) dudit faisceau laser de forte puissance (3).

3. Procédé selon l'une des revendications 1 ou 2,
**caractérisé en ce que** ledit faisceau laser de sécurité (8) présente la forme d'une enveloppe conique divergeant dans ledit espace (4).

4. Procédé selon l'une des revendications 1 à 3, dans lequel ledit faisceau laser de forte puissance (3) est mobile pour balayer ledit espace (4) à sécuriser,
**caractérisé en ce que** ledit faisceau laser de sécurité (8) est solidaire en déplacement dudit faisceau laser de forte puissance (3).

5. Procédé selon l'une des revendications 1 à 4,
**caractérisé en ce que**, avant d'émettre ledit faisceau laser de forte puissance (3), on fait décrire audit faisceau laser de sécurité (8) au moins un motif de balayage (20,21) permettant de s'assurer qu'aucun objet (19) ne se trouve à l'intérieur de ladite enveloppe qu'il forme.

6. Procédé selon la revendication 5,
**caractérisé en ce que** ledit motif de balayage (20,21) représente au moins approximativement une spirale.

7. Procédé selon l'une des revendications 3 à 6,
**caractérisé en ce qu'**on engendre une pluralité de faisceaux laser de sécurité coaxiaux (8.1, 8.2, 8.3...), disposés l'un à la suite de l'autre, chacun desdits faisceaux laser de sécurité étant logé en partie dans le faisceau laser de sécurité précédent, ayant une densité de puissance supérieure à celle de ce faisceau laser de sécurité précédent et présentant une divergence inférieure à celle dudit faisceau laser de sécurité précédent.

8. Dispositif pour sécuriser un espace (4) traversé par un faisceau laser de forte puissance (3),
**caractérisé en ce qu'**il comporte :
• au moins un générateur (5) de faisceau laser de sécurité à faible densité de puissance ;
• un élément optique (7,24) pour donner audit faisceau laser de sécurité la forme d'une enveloppe conique (8) qui diverge dans ledit espace et qui est positionnée et alignée pour entourer ledit faisceau laser de forte puissance (3) sur au moins une partie de sa longueur ;
• un photodétecteur (11) observant ladite enveloppe (8) formée par le faisceau laser de sécurité ; et
• des moyens (15) de commande de l'émission dudit faisceau laser de forte puissance contrôlés par ledit photodétecteur (11), les moyens (15) de commande étant aptes à interdire l'émission dudit faisceau laser de forte puissance (3) lorsqu'un objet (19) rencontre une première fois ledit faisceau laser de sécurité (8) et à rétablir l'émission dudit faisceau laser de forte puissance (3) lorsque le même objet rencontre une deuxième fois ledit faisceau laser de sécurité (8).

9. Dispositif selon la revendication 8,
**caractérisé en ce que** ledit élément optique pour donner audit faisceau laser de sécurité la forme d'une enveloppe conique est un axicon (7).

10. Dispositif selon la revendication 8,
**caractérisé en ce que** ledit photodétecteur (11) observe ladite enveloppe (8) formée par le faisceau laser de sécurité à travers ledit axicon (7).

11. Dispositif selon la revendication 8,
**caractérisé en ce que** ledit élément optique pour donner audit faisceau laser de sécurité la forme d'une enveloppe conique est un miroir tournant (4).

12. Dispositif selon l'une des revendications 8 à 11,
**caractérisé en ce qu'**il comporte des moyens pour adapter le seuil de détection dudit photodétecteur (11) à la luminosité ambiante.

13. Système laser de forte puissance,
**caractérisé en ce qu'**il comporte le dispositif de sécurisation spécifié sous l'une quelconque des revendications 8 à 12.

## Patentansprüche

1. Verfahren zur Sicherung eines von einem Hochleistungslaserstrahl (3) durchkreuzten Raums (4):
**dadurch gekennzeichnet, dass**:
• mindestens ein Sicherheitslaserstrahl von geringer Leistungsdichte (8) erzeugt wird, der die Form einer Hülle aufweist, die positioniert und ausgerichtet wird, um den Hochleistungslaserstrahl (3) an mindestens einem Teil (3.1) der Länge desselben zu umgeben;
• die Emission des Hochleistungslaserstrahls (3) für den Fall untersagt wird, dass ein Gegenstand (19) auf den Sicherheitslaserstrahl trifft; und
• die Emission des Hochleistungslaserstrahls (3) untersagt wird, wenn ein Gegenstand (19) ein erstes Mal auf den Sicherheitslaserstrahl (8) trifft, und die Emission des Hochleistungslaserstrahls (3) wiederhergestellt wird, wenn derselbe Gegenstand ein zweites Mal auf den Sicherheitslaserstrahl (8) trifft.

2. Verfahren nach Anspruch 1,
**dadurch gekennzeichnet, dass** der Sicherheitslaserstrahl (8) mindestens den Anfangsteil (3.1) des Hochleistungslaserstrahls (3) umgibt.

3. Verfahren nach einem der Ansprüche 1 oder 2,
**dadurch gekennzeichnet, dass** der Sicherheitslaserstrahl (8) die Form einer konischen Hülle aufweist, die in dem Raum (4) divergiert.

4. Verfahren nach einem der Ansprüche 1 bis 3, wobei der Hochleistungslaserstrahl (3) beweglich ist, um den zu sichernden Raum (4) abzutasten,
**dadurch gekennzeichnet, dass** der Sicherheitslaserstrahl (8) bewegungsfest mit dem Hochleistungslaserstrahl (3) verbunden ist.

5. Verfahren nach einem der Ansprüche 1 bis 4,
**dadurch gekennzeichnet, dass** man den Sicherheitslaserstrahl (8) vor dem Emittieren des Hochleistungslaserstrahls (3) mindestens ein Abtastmotiv (20,21) beschreiben lässt, wodurch es möglich ist, sich zu vergewissern, dass sich kein Gegenstand (19) im Inneren der Hülle, die er bildet, befindet.

6. Verfahren nach Anspruch 5,
**dadurch gekennzeichnet, dass** das Abtastmotiv (20,21) mindestens annähernd eine Spirale darstellt.

7. Verfahren nach einem der Ansprüche 3 bis 6,
**dadurch gekennzeichnet, dass** eine Vielzahl von koaxialen Sicherheitslaserstrahlen (8.1, 8.2, 8.3...) erzeugt werden, die nacheinander angeordnet sind, wobei jeder der Sicherheitslaserstrahlen teilweise in dem vorangehenden Sicherheitslaserstrahl untergebracht ist, eine höhere Leistungsdichte als jene des vorangehenden Sicherheitslaserstrahls aufweist, und eine geringere Divergenz als jene des vorangehenden Sicherheitslaserstrahls aufweist.

8. Vorrichtung zur Sicherung eines von einem Hochleistungslaserstrahl (3) durchkreuzten Raums (4),
**dadurch gekennzeichnet, dass** sie beinhaltet:
• mindestens einen Erzeuger (5) eines Sicherheitslaserstrahls von geringer Leistungsdichte;
• ein optisches Element (7,24), um dem Sicherheitslaserstrahl die Form einer konischen Hülle (8) zu verleihen, die in dem Raum divergiert, und die positioniert und ausgerichtet wird, um den Hochleistungslaserstrahl (3) an mindestens einem Teil seiner Länge zu umgeben;
• einen Fotodetektor (11), der die durch den Sicherheitslaserstrahl gebildete Hülle (8) beobachtet; und
• Mittel (15) zum Steuern der Emission des Hochleistungslaserstrahls, die durch den Fotodetektor (11) kontrolliert werden, wobei die Mittel (15) zum Steuern imstande sind, die Emission des Hochleistungslaserstrahls (3) zu untersagen, wenn ein Gegenstand (19) ein erstes Mal auf den Sicherheitslaserstrahl (8) trifft, und die Emission des Hochleistungslaserstrahls (3) wiederherzustellen, wenn derselbe Gegenstand ein zweites Mal auf den Sicherheitslaserstrahl (8) trifft.

9. Vorrichtung nach Anspruch 8,
**dadurch gekennzeichnet, dass** das optische Element, um dem Sicherheitslaserstrahl die Form einer konischen Hülle zu verleihen, ein Axicon (7) ist.

10. Vorrichtung nach Anspruch 8,
**dadurch gekennzeichnet, dass** der Photodetektor (11) die durch den Sicherheitslaserstrahl gebildete Hülle (8) durch das Axicon (7) hindurch beobachtet.

11. Vorrichtung nach Anspruch 8,
**dadurch gekennzeichnet, dass** das optische Element, um dem Sicherheitslaserstrahl die Form einer konischen Hülle zu verleihen, ein Drehspiegel (4) ist.

12. Vorrichtung nach einem der Ansprüche 8 bis 11,
**dadurch gekennzeichnet, dass** sie Mittel beinhaltet, um die Detektionsschwelle des Photodetektors (11) an die Umgebungshelligkeit anzupassen.

13. Hochleistungslasersystem,
**dadurch gekennzeichnet, dass** es die Vorrichtung zur Sicherung nach einem der Ansprüche 8 bis 12 beinhaltet.

## Claims

1. Method for ensuring the safety of a space (4) through which a high-power laser beam (3) passes:
**characterised in that**:
• at least one low-power-density safety laser beam (8) is generated in the form of an envelope which is positioned and aligned so as to surround said high-power beam (3) over at least a portion (3.1) of the length thereof;
• the emission of said high-power laser beam (3) is prevented when an object (19) encounters said safety laser beam; and
• the emission of said high-power laser beam (3) is prevented when an object (19) encounters said safety laser beam (8) for the first time, and the emission of said high-power laser beam (3) is re-established when the same object encounters said safety laser beam (8) for a second time.

2. Method according to claim 1,
**characterised in that** said safety laser beam (8) surrounds at least the initial portion (3.1) of said high-power laser beam (3).

3. Method according to either claim 1 or claim 2,
**characterised in that** said safety laser beam (8) is in the form of a conical envelope which diverges in said space (4).

4. Method according to any of claims 1 to 3, in which said high-power laser beam (3) can be moved in order to scan said space (4) to be made safe,
**characterised in that** said safety laser beam (8) is moved together with said high-power laser beam (3).

5. Method according to any of claims 1 to 4,
**characterised in that**, before said high-power laser beam (3) is emitted, said safety laser beam (8) traces at least one scanning pattern (20, 21), which makes it possible to ensure that there are no objects (19) within said envelope formed by said safety laser beam.

6. Method according to claim 5,
**characterised in that** said scanning pattern (20, 21) is, at least approximately, a spiral.

7. Method according to any of claims 3 to 6,
**characterised in that** a plurality of coaxial safety laser beams (8.1, 8.2, 8.3, etc.) are generated and arranged one after the other, each of said safety laser beams being embedded in part in the preceding safety laser beam, having a greater power density than that of the preceding safety laser beam, and having a smaller divergence than that of the preceding safety laser beam.

8. Device for ensuring the safety of a space (4) through which a high-power laser beam (3) passes,
**characterised in that** it comprises:
• at least one generator (5) of a low-power-density safety laser beam;
• an optical element (7, 24) for giving said safety laser beam the form of a conical envelope (8) which diverges in said space and is positioned and aligned so as to surround said high-power laser beam (3) over at least a portion of the length thereof;
• a photodetector (11) which monitors said envelope (8) formed by the safety laser beam; and
• means (15) for triggering the emission of said high-power laser beam, which means are controlled by said photodetector (11), the triggering means (15) being capable of preventing the emission of said high-power laser beam (3) when an object (19) encounters said safety laser beam (8) for the first time, and being capable of re-establishing the emission of said high-power laser beam (3) when the same object encounters said safety laser beam (8) for a second time.

9. Device according to claim 8,
**characterised in that** said optical element for giving said safety laser beam the form of an envelope is an axicon (7).

10. Device according to claim 8,
**characterised in that** said photodetector (11) monitors said envelope (8) formed by the safety laser beam through said axicon (7).

11. Device according to claim 8,
**characterised in that** said optical element for giving said safety laser beam the form of a conical envelope is a rotating mirror (4).

12. Device according to any of claims 8 to 11,
**characterised in that** it comprises means for adjusting the detection threshold of said photodetector (11) to the ambient light.

13. High-power laser system,
**characterised in that** it comprises the safety device specified under any of claims 8 to 12.
